# EUROPÄISCHE PATENTSCHRIFT

(11) **EP 3 106 778 B1**
(45) Veröffentlichungstag und Bekanntmachung des Hinweises auf die Patenterteilung: **24.04.2019**
(21) Anmeldenummer: 16176343.8
(22) Anmeldetag: 11.12.2014
(51) Int. Cl.: B23C 3/00, F28F 21/06, B29D 23/00, F24T 10/15

(54) **ERDWÄRMEROHR UND ERDWÄRMESONDE**
GEOTHERMAL PIPE AND GEOTHERMAL PROBE
TUBE GÉOTHERMIQUE ET SONDE GÉOTHERMIQUE

(30) Priorität: 27.02.2014 DE 102014002651; 15.04.2014 DE 202014003234 U
(43) Veröffentlichungstag der Anmeldung: 21.12.2016
(62) Teilanmeldung aus: 14197302.4
(73) Patentinhaber: G.H.P.- e.K. Geothermie- Handel- und Produktion e.k., 83224 Grassau (DE)
(72) Erfinder: Schuster, Franz-Xaver, 83224 Grassau (DE)
(74) Vertreter: Becker Kurig Straus

(56) Entgegenhaltungen:
- EP-A1- 2 395 301
- EP-A2- 2 273 213
- WO-A1-03/064915
- AT-A1- 505 104
- CH-A5- 687 268
- DE-A1-102007 002 606
- DE-A1-102008 029 400
- DE-B3-102007 025 905
- DE-U1- 20 306 216
- JP-A- 2001 255 081
- JP-A- 2006 234 340
- US-A1- 2002 104 643
- US-A1- 2013 292 937
- US-A1- 2013 333 383
- DATABASE EPODOC [Online] EUROPEAN PATENT OFFICE, THE HAGUE, NL; XP002764083, Database accession no. KR-20130134539-A -& KR 101 368 362 B1 (KD POWER CO LTD [KR]) 3. März 2014 (2014-03-03)
- DATABASE EPODOC [Online] EUROPEAN PATENT OFFICE, THE HAGUE, NL; XP002764084, Database accession no. JP-2005014840-A -& JP 2006 200848 A (KIMURA KOHKI CO) 3. August 2006 (2006-08-03)

## Beschreibung

Die vorliegende Erfindung betrifft ein Erdwärmerohr und eine damit ausgerüstete Erdwärmesonde.

Eine mit einem Erdwärmerohr verbundene Erdwärmesonde ist ein geschlossenes, mit einer zirkulierenden W ärmeträgerflüssigkeit befülltes U-förmiges Rohrsystem. Sie wird in der Regel in ein vertikal oder seltener schräg angeordnetes Bohrloch in dem Untergrund eingebaut. Mit der Erdwärmesonde wird dem Erdreich Wärme entzogen, die meist an den Wärmetauscher (Verdampfer) einer Wärmepumpe weitergegeben wird. Mit Hilfe der Wärmepumpe ist die wirtschaftliche Nutzung der Erdwärme zur Gebäudeheizung möglich. Die Erdwärmesonde ist eine Nutzungsmöglichkeit der oberflächennahen Geothermie.

Die übliche und weit verbreitete Erdwärmesonde besteht aus Polyethylen-Kunststoffrohren, die am jeweils unteren Ende mit einem U-förmigen Fußteil verbunden sind. Man spricht daher auch von U-Sonden oder Doppel-U-Sonden, wenn zwei Rohrpaare pro Bohrloch verwendet werden. Möglich sind aber auch koaxiale Sonden, bei denen Vor- und Rücklauf bzw. Auf- und Abstieg des Wärmeträgerfluids im Innenrohr und im Ringraum zwischen innerem und äußerem Rohr der Koaxialsonde erfolgen. Die Rohre werden im geschlossenen Kreislauf von einer Sole, einem Gemisch aus Wasser und Frostschutzmittel, durchströmt. Solegefüllte Erdsonden sind jedoch häufig in wasserwirtschaftlich sensiblen Gebieten nicht zugelassen.

Aus den Patentschriften CH 697102A5, der Offenlegungsschrift DE 10 2007 002 606 A1 sowie der Gebrauchsmusterschrift DE 203 06 216 U1 sind bereits verschiedene Erdwärmerohre bekannt.

Bei bisher bekannten Erdwärmesondenfüßen treten Probleme auf, da die Sondenfüße entweder im Spritzguss hergestellt wurden oder aus mehreren Teilen zusammengesetzt werden. Beim Spritzguss können Probleme durch beim Spritzvorgang gebildete OberflächenStrukturen oder durch Grate an unterschiedlichen Teile der Spritzform entstehen. Bei Schweißvorgängen entstehen üblicherweise Schweißnähte und Schweißgrate, wobei die Schweißnähte eine Schwächung des Bauteil bedeuten, und die Schweißgrate üblicherweise einen Schweißgrat erzeugen, der sich auch in einen Kanal erstreckt, durch den das Wärmeträgerfluid fließt und in seiner Strömung behindert wird.

Es ist Aufgabe der vorliegenden Erfindung, ein Erdwärmerohr bereitzustellen, das die vorgenannten Nachteile nicht aufweist, besonders stabil ist, sicher verlegt werden kann und eine besonders strömungsgünstige Form des Kanals aufweist.

Weitere Erdwärmesonde sind aus den Veröffentlichungen JP2001255081A und KR101368362B bekannt.

Diese Aufgabe wird gelöst durch ein Erdwärmerohr nach Anspruch 1. Vorteilhafte Ausführungsformen ergeben sich aus den Unteransprüchen.

Gemäß der Erfindung wird ein Erdwärmerohr bereitgestellt, das an der Rohraußenseite eine Längsriffelung mit einer Riffeltiefe zwischen 1,5 und 0,2mm aufweisen. In einer weiteren Ausführungsform beträgt die Riffeltiefe zwischen 1,0 und 0,3mm. In einer zusätzlichen Ausführungsform des erfindungsgemäßen Erdwärmerohe beträgt die Riffeltiefe zwischen 0,6 und 0,4mm. Diese Längsriffeln sollen eine Anbindung an ein Füllmaterial zwischen dem Bohrloch und der Erdwärmesonde verbessern. Durch eine bessere Anbindung kann zudem das Erdwärmerohr besser gegenüber dem Füllmaterial abgedichtet werden, da die Kontaktfläche zwischen dem Füllmaterial und dem Erdwärmerohr vergrößert wird und das Füllmaterial durch die Riffelung besser an dem Rohr haftet. Ein geriffeltes Rohr weist zusätzlich den Vorteil auf, dass leichte Beschädigungen am Rohr vermieden werden können. Bevor eine Beschädigung an dem Rohr selbst auftritt, müssen vorher die Riffel beschädigt werden, wobei die Wandstärke des Rohrs selber nicht verringert wird. Somit kann ein Erdwärmerohr mit einer Außenriffelung die Funktionssicherheit einer Erdwärmesonde verbessern.
Erfindungsgemäß sind die Riffel im Querschnitt trapezoid, T-förmig oder pilzförmig ausgeführt. Trapezförmige Riffeln ermöglichen ein Ineinandergreifen zwischen den Riffeln und dem Füllmaterial, wodurch eine weiter verbesserte Anbindung erzielt werden kann. Hier kann sich das Füllmaterial vor dem Aushärten hinter die trapezförmigen Riffel legen und so einen Formschluss zwischen dem Erdwärmerohr und den Riffeln erreichen. Der Begriff trapezförmige Riffelung und T-förmige Riffel soll dabei auch alle Riffelungen umfassen, die eine Hinterschneidung aufweisen, wie im Querschnitt pilzförmige Riffel.

Erfindungsgemäss liegt die Riffelung nur abschnittsweise auf dem Erdwärmerohr vor. Dabei wechseln sich Riffel-Abschnitte mit Unterbrechungs-Abschnitten oder Abschnitten mit einer anderen Riffelung ab. Es ist bevorzugt, dass die Riffel-Abschnitte R deutlich länger als ungeriffelte Unterbrechungs-Abschnitte U sind. Durch die Grenzen zwischen den Riffel-Abschnitten R und den Unterbrechungs-Abschnitten U sollen Grenzen geschaffen werden, die ein Ablöseverhalten zwischen dem Rohr und dem Füllmaterial verändern. Sollte sich die Verbindung zwischen dem Rohr und dem Füllmaterial in einem Bereich lösen, soll durch die Grenzen verhindert werden, dass diese Ablösung ungehindert an dem gesamten Erdwärmerohr entlangwandern kann.

Bei einer anderen Ausführung sind Riffel mit einer sägezahnartigen Stufung versehen, die in Längsrichtung verläuft. Dadurch kann man durch einfaches Überstreichen des Rohres eine Vorzugsrichtung feststellen (wenn alle Sägezähne in die gleiche Längsrichtung weisen), wodurch eine vorgesehene Strömungsrichtung in dem Erdwärmerohr an jeder Stelle festgestellt werden kann.

Bei einer anderen Ausführungsform des erfindungsgemäßen Erdwärmerohrs ist dieses mit einer Strömungsrichtungsangabe versehen. Auch wenn das vorliegende Erdwärmerohr auf der Innenseite (nur) glatt ist, können an den Übergängen, Verbindungsstücken und dergleichen Einlauf- und Auslaufkonusse angebracht sein, die den Strömungswiederstand des Gesamtsystems positiv beeinflussen können.

Bei einer anderen Ausführungsform ist die Riffelung um bis zu 15° oder sogar bis zu 35° gegenüber einer Achse der Erdwärmerohre geneigt. Bei einer geneigten oder helixartigen Riffelung kann beispielsweise durch eine Drehrichtung oder eine Steilheit der Drehung sofort festgestellt werden, welches Rohr vorliegt.

Bei einer zusätzlichen Ausführungsform des Erdwärmerohres mit Außen-Längs-Riffelung sind konkave Abschnitte der Riffelung verrundet. Damit sind die Täler der Riffel abgerundet ausgeführt und können damit leichter von einem Füllmaterial wie Beton gefüllt werden. Es kann ebenfalls vorgesehen sein, die Krümmung an das jeweilige Füllmaterial der Sondenbohrung anzupassen, um so eine maximale Anbindung der Sondenrohre an das Füllmaterial zu erreichen. Je größer die Körnung des Füllmaterials ist, desto größer können auch die Riffel bzw. die Krümmungs- bzw. Verrundungsradien der Riffeltäler ausgeführt werden.

In einer weiteren Ausführungsform der vorliegenden Erfindung sind bei in Abschnitten vorliegenden Riffelungen Übergänge zwischen den geriffelten und den ungeriffelten Abschnitten vorgesehen. Diese Übergänge können dazu beitragen, das Erdwärmerohr in Längsrichtung abzudichten. Sanfte Übergänge können im Vergleich zu unstetigen, abrupten Übergängen das Erdwärmerohr bei einer Belastung in Axialrichtung besser abdichten, da auch bei einer relativ geringen axialen Kraft ein beispielsweise konischer Übergang eine größeren Kraft in Radialrichtung erzeugen kann.

Es kann vorgesehen sein, dass es vorteilhaft ist, Vorlauf- von Rücklaufrohren zu unterscheiden, wenn beispielsweise eine Doppel-U-Sonde in ein Bohrloch eingesetzt ist, ist an den Rohren nicht ohne weiteres zu erkennen, welche der Rohre jeweils durch das in der Erde verborgene U verbunden sind. Es kann daher dazu kommen, dass die Enden der Erdwärmerohre einer Doppel-U-Sonde falsch zusammengefügt werden. Dies kann bei Verwendung von geriffelten oder in der Flussrichtung gekennzeichneten Rohren einfach und sicher ausgeschlossen werden. Da die Erdwärmerohre üblicherweise vor dem Verschweißen in Muffen außen kalibriert bzw. auf einen Nenndurchmesser gebracht werden, stellt die Riffelung beim Verschweißen kein Problem dar, da sie vor dem Verschweißen entfernt wird.

Eine Unterscheidbarkeit der Rohre kann mit der vorliegenden Erfindung einfach dadurch erreicht werden, dass beispielsweise für einen Vorlauf nur ungeriffelte Rohre verwendet werden, während für einen Rücklauf nur gerade oder schräg geriffelte Rohre Verwendung finden oder umgekehrt. Es ist ebenfalls möglich, nur gerade geriffelte Rohre für eine Vorlaufrichtung zu verwenden und beispielsweise schräg geriffelte Rohre nur für eine Rücklaufrichtung zu verwenden oder umgekehrt. Dadurch kann bei Wartungsarbeiten oder bei einer Beschädigung der Rohre sofort festgestellt werden, ob ein Vorlauf- oder Rücklaufrohr betroffen ist.

In einer Ausführungsform des Erdwärmerohrs besteht dieses aus Polyethylen PE 100. In einer weiteren Ausführungsform des Erdwärmerohrs besteht dieses aus PE 100 RC. In einer Ausführungsform des Erdwärmerohrs besteht dieses aus Polyethylen PE 100 RT. Diese beiden Materialien lassen sich besonders gut mit dem Material verschweißen, aus dem Erdwärmesondenfüße hergestellt werden.

In den Figuren werden Ausführungsformen der vorliegenden Erfindung schematisch dargestellt.

Figuren 1A und 1B zeigen einen herkömmlichen Erdwärmesondenfuß, der aus zwei Stücken zusammengesetzt ist, in einer Aufsicht und in einer Schnittansicht.

Figuren 2A bis 2C zeigen eine Aufsicht von oben und zwei Schnittansichten von Ausführungsformen eines Erdwärmesondenfußes.

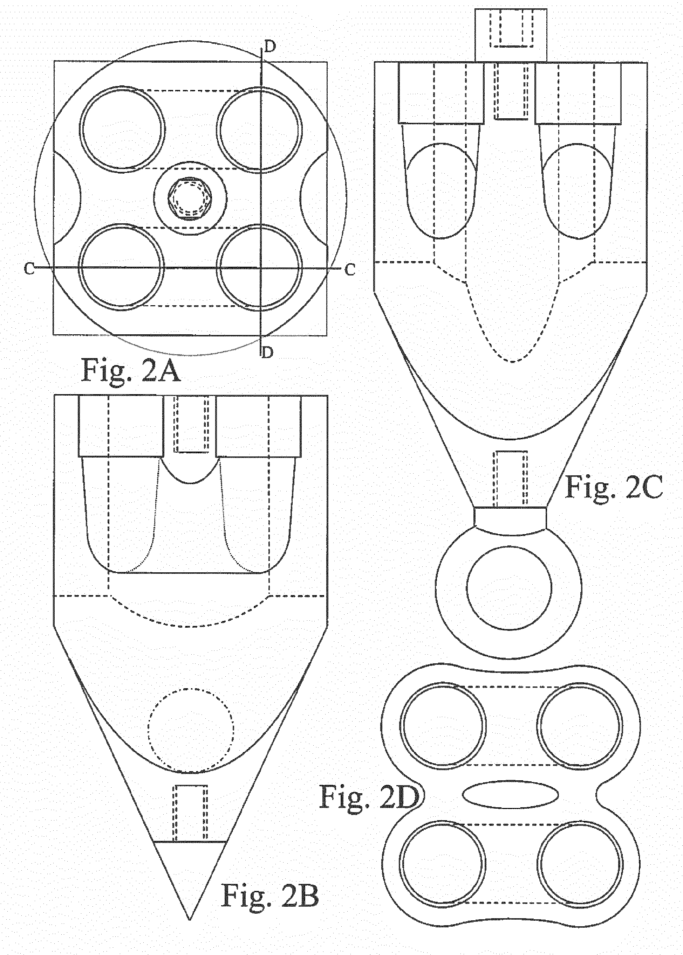

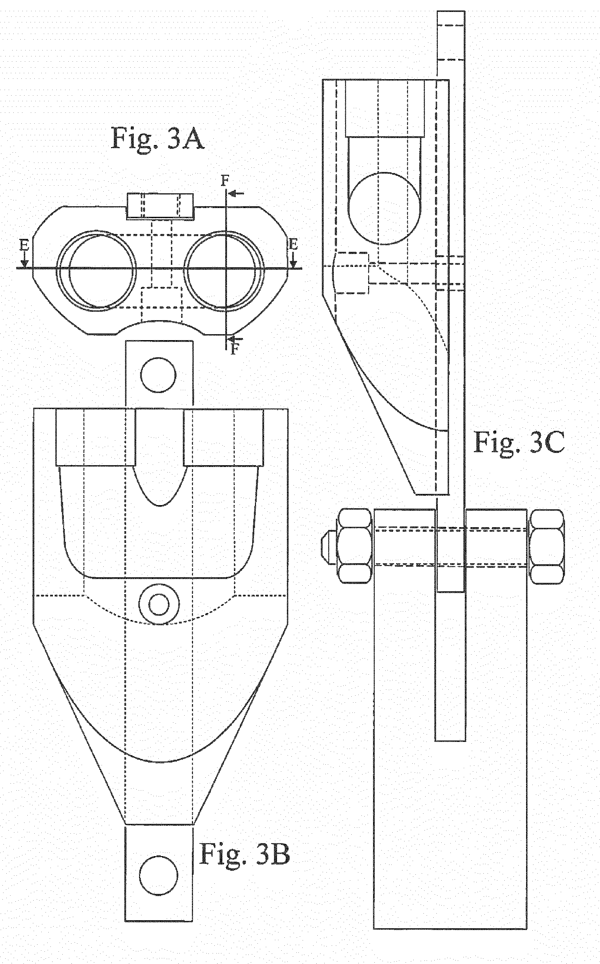

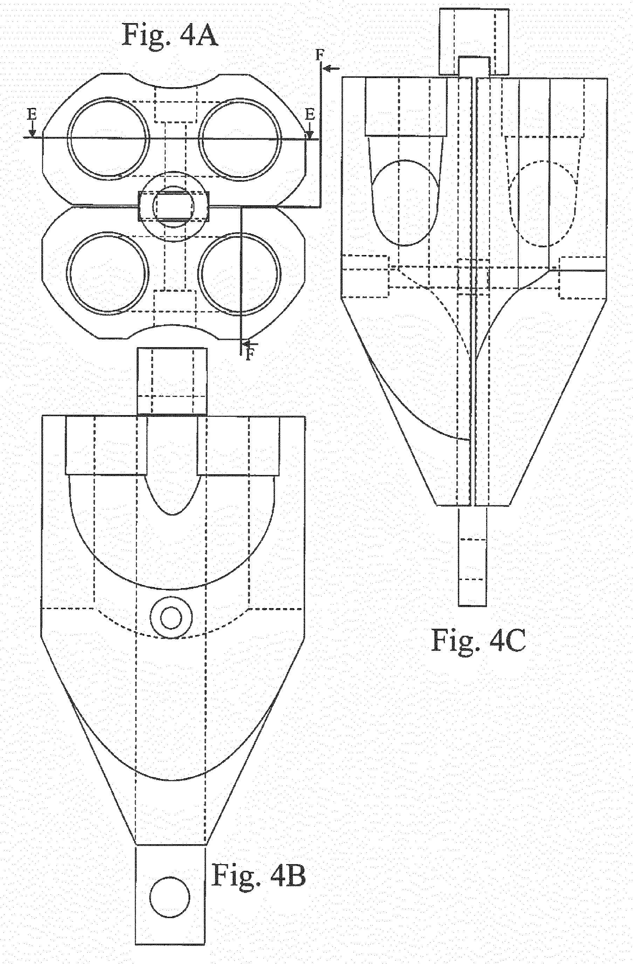

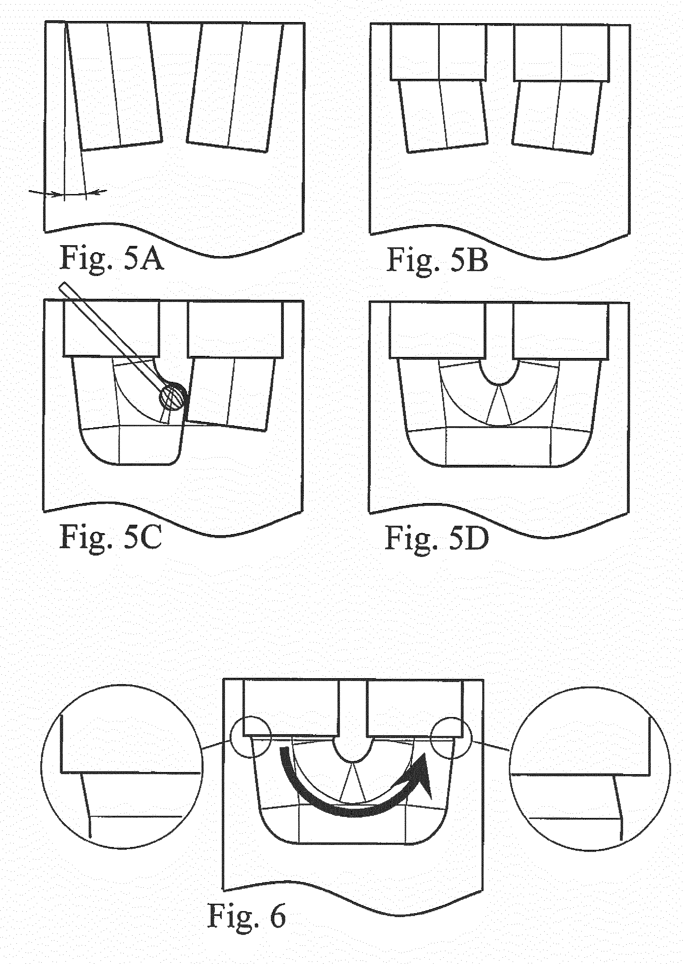

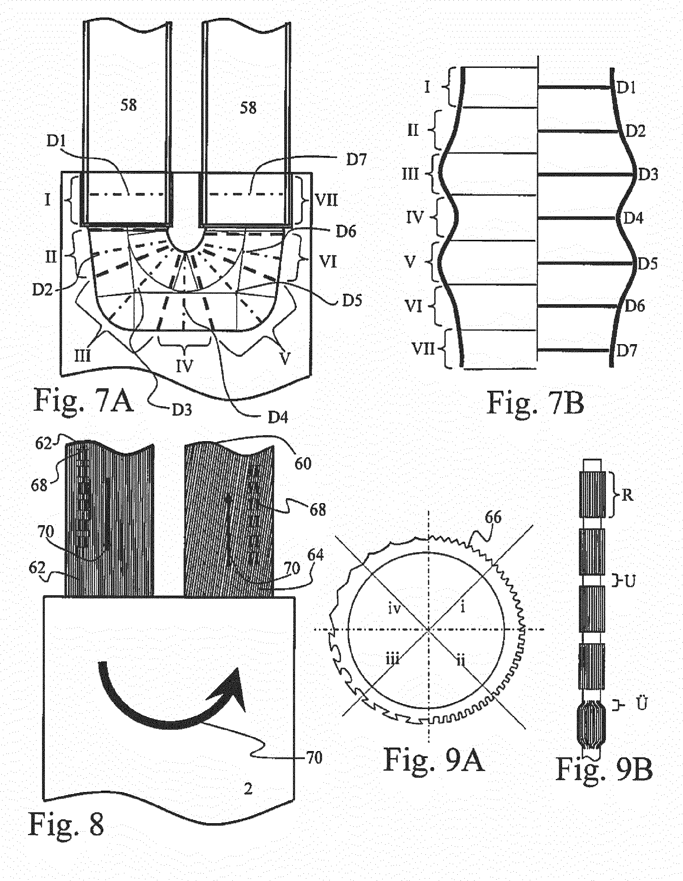

Figur 2B zeigt eine Aufsicht von oben auf eine Querschnittsoptimierte Ausführungsform eines Erdwärmesondenfuß.Figuren 3A bis 3C zeigen eine Aufsicht von oben und zwei Schnittansichten von einer Ausführungsform eines Einfach-U-Erdwärmesondenfußes.Figuren 4A bis 4C zeigen eine Aufsicht von oben und zwei Schnittansichten von einer Ausführungsform eines Doppel-U-Erdwärmesondenfußes, der aus zwei Einfach-U-Erdwärmesondenfüßen nach Figur 3A bis 3C zusammengesetzt sind.Figuren 5A bis 5C zeigen einzelne Schritte zum Spanen des Kanals.Figur 6 zeigt einen Schnitt durch einen Kanal mit Einström- bzw. Ausström-Konen.Figuren 7A und 7B stellen ein Durchmesserprofil bzw. Höhenprofil von Abschnitten des Kanals dar.Figur 8 zeigt eine Sonde, die einen Erdwärmekopf mit erfindungsgemäßen Erdwärmerohren kombiniert.Figur 9A zeigt einen Querschnitt durch ein erfindungsgemäßes Erdwärmerohr mit einer Längsriffelung.

Figur 9B zeigt eine Seitenansicht eines erfindungsgemäßen Erdwärmerohrs mit einer abschnittweisen Längsriffelung.

Sowohl in den Figuren als auch in der Beschreibung werden gleiche oder ähnliche Bezugszeichen verwendet, um auf gleiche oder ähnliche Elemente und Komponenten Bezug zu nehmen.

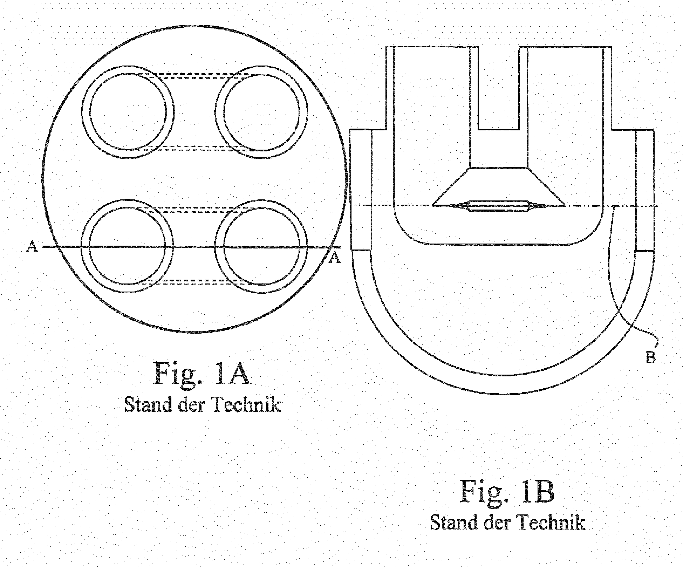

Figuren 1A und 1B zeigen einen herkömmlichen Erdwärmesondenfuß, der aus zwei Stücken zusammengesetzt ist in einer Aufsicht und in einer Schnittansicht.
   In der Aufsicht von Figur 1A sind vier Ansatzstücke zu erkennen, an die mit einer gesonderten Heizmuffe Erdwärmerohre angeschlossen werden können. An dem Doppel-U-Sondenfuß ist eine Schnittlinie A-A dargestellt.
Figur 1B stellt einen Schnitt durch Figur 1A dar. In Figur 1B ist eine Linie 8 dargestellt, an denen die Teile 6 und 6' zusammengeschweißt wurden. Beim Stand der Technik wurden die beiden Teile vor dem Zusammenschweißen mit im Querschnitt halbrunden Kanälen versehen, die nach dem Zusammenfügen einen U-förmigen Kanal ergeben. An den durch die Bohrungen erreichbaren Stellen kann eine herausgequollene Schweißnaht herausgebohrt werden. In dem waagerechten Teil des u-förmigen Kanals ist dies jedoch nicht möglich, wie es mit einer Endoskop-kamera oder einem Inspektionsspiegel an einem Sondenfuß nachgewiesen werden kann. Diese Reste von Schweißnähten stören die Strömung eines Erdwärmefluids. Die herkömmliche Auslegung hat zudem den Nachteil, dass an den Innenseiten der Bogenabschnitte Kanten mit einem Winkel von 90° auftreten, was sich ebenfalls negativ auf das Strömungsverhalten des Erdwärmefluids auswirkt.
Figuren 2A bis 2C zeigen eine Aufsicht von oben und zwei Schnittansichten von Ausführungsformen eines erfindungsgemäßen Erdwärmesondenfußes.
Figur 2A zeigt eine Aufsicht auf einen erfindungsgemäßen Doppel-U-Erdwärmefuß 2. Der Doppel-U-Erdwärmefuß 2 umfasst einen ersten und einen zweiten u-förmigen Kanal 12 und 14. Jeder der Kanäle endet in zwei der insgesamt vier parallelen Muffen 10. In der Mitte ist ein oberes Gewinde 34 an einem oberen Ende 36 des Erdwärmefußes 2 angebracht, um ein Einschubgestänge anzubringen. In das Gewinde 34 ist eine Inbusschraube 35 eingesetzt, die dazu dient, eine Kraft von einem Einschubgestänge in den Sondenfuß 2 einzuleiten. Seitlich ist der Erdwärmefuß 2 mit zwei Seitenkanälen 24 versehen, die die projizierte Stirnfläche des Erdwärmefußes 2 verringern. Der Erdwärmefuß 2 umfasst dabei lediglich einen einzigen einstückigen Körper 4 ohne eine Schweißnaht und ohne irgendwelche Gussnähte innerhalb der Kanäle 12 oder 14. Die Schnittlinien C-C und D-D zeigen die Schnittverläufe der Schnittansichten von Figur 2B und 2C.
Figur 2B zeigt eine Schnittansicht des erfindungsgemäßen Doppel-U-Erdwärmefuß 2 entlang der Schnittlinie C-C von Figur 2A. Im Schnitt ist der genaue Verlauf des zweiten u-förmigen Kanals 14 zu erkennen. Da der Doppel-U-Erdwärmefuß 2 aus einem einzigen einstückigen Körper 4 spanend herausgearbeitet ist, weist der Kanal 14 keine Schweißnähte, Schweißraupen oder dergleichen auf. Der zweite u-förmige Kanal 14 endet in insgesamt zwei parallelen Muffen 10. Oben in der Mitte ist ein oberes Gewinde 34 an dem oberen Ende 36 des Erdwärmefußes 2 angebracht, um ein Einschubgestänge anzubringen. Unten in der Mitte ist ein unteres Gewinde 38 an einer Unterseite 30 des Erdwärmefußes 2 angebracht. In das untere Gewinde ist in Figur 2B eine Spitze eingeschraubt. Durch einen strichpunktierten Kreis ist der Ort angegeben, an dem aus dem Körper 4 des Erdwärmefußes 2 eine Öse 46 herausgearbeitet sein kann. Dazu kann der Unterteil des Erdwärmefußes 2 abgeflacht werden, um beispielsweise ein Gewicht besser aufnehmen zu können. In Figur 2B ist die Inbusschraube 35 nicht dargestellt.
Figur 2C zeigt eine Schnittansicht des erfindungsgemäßen Doppel-U-Erdwärmefuß 2 entlang der Schnittlinie D-D von Figur 2A. Im Schnitt ist der genaue Querschnitt einer Ausführung der zwei u-förmigen Kanäle 12 und 14 zu erkennen. Da der Doppel-U-Erdwärmefuß 2 aus einem einzigen einstückigen Körper 4 spanend herausgearbeitet ist, weisen die Kanäle 12 und 14 keinerlei Schweißnähte, Schweißraupen oder dergleichen auf. Auch hier enden die u-förmigen Kanäle 12, 14 in insgesamt 2 parallelen Muffen 10. Oben in der Mitte befindet sich ein oberes Gewinde 34 an dem oberen Ende 36 des Erdwärmefußes 2. In das Gewinde 34 ist eine Inbusschraube 35 eingesetzt, deren Kopf in einer Seitenansicht zu erkennen ist. Unten in der Mitte ist ein unteres Gewinde 38 an einer Unterseite 30 des Erdwärmefußes 2 angebracht. In das untere Gewinde ist in Figur 2C eine Einschrauböse 44 anstelle der Spitze 42 von Figur 2B eingeschraubt. Ein Gewicht kann so einfach an der Öse 44 eingehängt werden.
In Figur 2D ist eine Aufsicht auf einen Erdwärmefuß mit den Muffen und den Kanälen 12 und 14 dargestellt. Der Erdwärmefuß mit ist mit zwei Seitenkanälen 24 und einem Zentralkanal 26 versehen. Der Erdwärmefuß von Figur 2D ist auf eine minimale projizierte Stirnfläche optimiert. Da der Erdwärmefuß aus einem vollen Stück herausgespant ist, ist es ebenfalls möglich, die gesamte Außenform beliebig zu gestalten, ohne dadurch den bisherigen Einschränkungen herkömmlicher spanender Werkzeugmaschinen zu unterliegen.
Figuren 3A bis 3C zeigen eine Aufsicht von oben und zwei Schnittansichten von einer Ausführungsform eines erfindungsgemäßen Einfach-U-Erdwärmesondenfußes.
Figur 3A zeigt eine Aufsicht auf einen erfindungsgemäßen Einfach-U-Erdwärmefuß. Der Einfach-U-Erdwärmefuß 2 umfasst nur einen ersten u-förmigen Kanal 12. Der Kanal endet in insgesamt zwei parallelen Muffen 10. An einer Seite des Einfach -U-Erdwärmefuß ist eine Längsnut 20 eingelassen. In der Längsnut 20 ist ein Flacheisen oder ein Flachstahl 22 angeordnet, der mit einer Durchgangsschraube (nicht gezeigt) an dem Einfach-U-Erdwärmefuß befestigt ist. durch die Nut kann sich das Flacheisen nicht verdrehen und ist stabilisiert. An den Löchern des Flacheisens 22 kann ein Einschubgestänge oder ein Gewicht angebracht werden. An einer Seite ist der Einfach -U-Erdwärmefuß mit einem Seitenkanal 24 versehen. Auch hier umfasst der Erdwärmefuß 2 lediglich einen einzigen einstückigen Körper 4, ohne eine Schweißnaht und ohne irgendwelche Gussnähte innerhalb des Kanals 12. Die Schnittlinien E-E und F-F zeigen die Schnittverläufe der Schnittansichten von Figur 3B und 3C.
Figur 3B zeigt eine Schnittansicht des erfindungsgemäßen Einfach-U-Erdwärmefußes entlang der Schnittlinie E-E von Figur 3A. Im Schnitt ist der genaue Verlauf des zweiten u-förmigen Kanals 12 zu erkennen. Der Einfach-U-Erdwärmefuß ist auch hier aus einem einzigen massiven Körper 4 spanend herausgearbeitet. Der Kanal 12 weist keine Schweißnähte, Schweißraupen oder Gussgrate auf. Der u-förmige Kanal 12 endet in insgesamt 2 parallelen Muffen 10. In der Mitte ist eine Durchgangsbohrung angebracht, durch die eine Schraube oder ein Niet das Flacheisen 22 an dem Erdwärmefuß in der Längsnut 20 befestigen kann. In der Figur ist gut zu erkennen, dass die Innenkontur des Kanals 12 nahezu parabelförmig und glatt und ohne Kanten ausgestaltet ist.
Figur 3C zeigt eine Schnittansicht des erfindungsgemäßen Einfach-U-Erdwärmefußes entlang der Schnittlinie F-F von Figur 3A. Im Schnitt ist der genaue und kreisrunde Querschnitt dieser Ausführung des u-förmigen Kanals 12 zu erkennen. Auch hier weist der Kanal 12 keinerlei Schweißnähte, Schweißraupen oder dergleichen auf. Auch hier endet der u-förmige Kanal 12 in zwei parallelen Muffen 10. An der linken Seite ist der Seitenkanal 24 von Figur 3A gut zu erkennen. Unten ist ein Gewicht 48 starr an dem Flacheisen 22 angeschraubt.
Figur 4A zeigt eine Aufsicht auf einen erfindungsgemäßen doppelten Einfach-U-Erdwärmefuß. Der Doppel-Einfach-U-Erdwärmefuß umfasst jeweils zwei getrennte erfindungsgemäße Einfach-U-Erdwärmesondenfüße, mit jeweils nur einem u-förmigen Kanal 12. Der Kanal 12 endet jeweils in zwei parallelen Muffen 10. An einer Seite jedes der Einfach -U-Erdwärmefüße ist eine Längsnut 20 eingelassen. In den Längsnuten 20 ist ein Flacheisen oder ein Flachstahl 22 angeordnet, der die beiden Füße miteinander durch eine nicht gezeigte Durchgangsschraube verbindet. Durch die Nut und das Flacheisen können sich die einzelnen Füße nicht gegeneinander verdrehen oder verschieben. Oben an dem Flacheisen 22 ist eine Rohrhülse 23 angebracht, in die ein Einschubgestänge oder ein Gewicht eingesteckt werden kann. An einer Seite ist jeder der Einfach-U-Erdwärmefüße jeweils mit einem Seitenkanal 24 versehen. Auch hier umfasst jeder der Erdwärmefüße lediglich einen einzigen einstückigen Körper 4 einen Kanal 12 ohne eine Schweißnaht und ohne irgendwelche Gussnähte innerhalb des Kanals 12. Die Schnittlinien G-G und H-H zeigen die Schnittverläufe der Schnittansichten von Figur 4B und 4C.
Figur 4B zeigt eine Schnittansicht des erfindungsgemäßen doppelten Einfach-U-Erdwärmefußes entlang der Schnittlinie G-G von Figur 4A. Im Schnitt ist der genaue Verlauf des zweiten u-förmigen Kanals 12 zu erkennen. In der Mitte ist eine Durchgangsbohrung angebracht, durch die eine Schraube oder ein Niet die beiden Füße miteinander verbinden kann. Die Innenkontur des Kanals 12 ist nahezu parabelförmig und glatt und weist keine Kanten auf. Im Gegensatz zu Figur 4A und 4C ist an dem Flacheisen 22 oben nur eine Durchgangsbohrung dargestellt, um ein Einschubgestänge daran zu befestigen. In Figur 4B ist der Kanal in einer besonders ausgerundeten Ausführung dargestellt.
Figur 4C zeigt eine Schnittansicht des erfindungsgemäßen Einfach-U-Erdwärmefußes entlang der Schnittlinie H-H von Figur 4A. Der Schnitt entspricht im Wesentlichen dem Schnitt von Figur 3C, wobei auch die gleichen Bezugszeichen verwendet wurden. Oben an dem Flacheisen 22 ist auch hier eine Rohrhülse 23 angebracht, in die ein Einschubgestänge oder ein Gewicht eingesteckt werden kann.
Figuren 5A bis 5C zeigen einzelne Schritte zum Spanen des Kanals. Zum Spanen des Kanals kann, wie in Figur 5A dargestellt, mit dem Bohren oder Fräsen einer ersten Bohrung II und einer zweiten Bohrung VI begonnen werden. Die Bohrungen II und VI sind hier in einem Winkel von 8° zueinander in den Körper hineingebohrt. Die beiden Bohrungen II und VI berühren sich dabei nicht. In Figur 5B ist dargestellt, wie die beiden Muffen I und VII in den Block hineingebohrt oder gefräst werden, um eine Anschlussmöglichkeit für die späteren Erdwärmerohre zu schaffen. In Figur 5C ist dargestellt, wie mit einem Kugelkopffräser ein erster Bogenabschnitt III in den Block hineingefräst wird. Mit einem spiegelsymmetrischen Vorgang kann der Kanal vervollständigt werden, wie es in der Figur 5D dargestellt ist. In Figur 5D sind die beiden Bogenabschnitte III und V durch einen kurzen waagerechten Abschnitt IV verbunden.
Figur 6 zeigt einen Schnitt durch einen Kanal mit Einström- bzw. Ausström-Konen bzw. - Trichtern. In Figur 6 ist der Übergang zwischen der erste Muffe I und der ersten Bohrung II an einer Einströmseite 50 mit einem Einlauftrichter 52 versehen, der den Strömungswiederstand an dieser Stelle, an einem Spalt oder einer Schweißnaht verringert. An der anderen Seite ist am Übergang zwischen der zweiten Bohrung VI und der zweiten Muffe VII eine Ausström- bzw. Auslaufseite 56 mit einer Auslaufverengung 54 versehen, die den Strömungswiederstand an dieser Stelle verringert, da der Fluidstrom von einem Spalt oder einer Schweißnaht weggeleitet wird. Die Querschnittsverringerung kann dabei sehr gering ausfallen, und glatt ausgeführt werden, um den Fluidstrom von einem Spalt wegzulenken. Es ist ebenfalls möglich ganz auf eine Querschnittsverengung zu verzichten, wenn der Querschnitt vor dem Ende der Bohrung erweitert wird, und am Ende der Bohrung wieder auf ein Normalmaß verringert wird. Ein derartiger Erdwärmesondenfuß kann mit einer Strömungsrichtungsangabe 72 versehen sein, um zu verhindern, dass die Einström- bzw. Ausström-Konen von einer falschen Seite aus angeströmt werden. Diese Ausführung kann vorteilhaft mit verschieden geriffelten Erdwärmerohen kombiniert werden.
Figuren 7A und 7B stellen ein Durchmesserprofil bzw. Höhenprofil von Abschnitten des Kanals dar. In Figur 7A sind die einzelnen Abschnitte des Kanals mit den entsprechenden Unterteilungen dargestellt. Der Abschnitt I bezeichnet die erste Muffe mit einem Durchmesser D1. Der Abschnitt II bezeichnet die erste Bohrung mit einem Durchmesser D2. Der Abschnitt III bezeichnet den ersten Bogenabschnitt mit einem erhöhten Durchmesser D3. Der Abschnitt IV bezeichnet einen Abschnitt zwischen den Bogenabschnitten mit einem Durchmesser D4. Der Abschnitt V bezeichnet den zweiten Bogenabschnitt mit einem erhöhten Durchmesser D5. Der Abschnitt VI bezeichnet die erste Bohrung mit einem Durchmesser D6. Der Abschnitt VII bezeichnet die erste Muffe mit einem Durchmesser D7.
   Durch die vergrößerte Querschnittsfläche des Kanals an dem ersten und dem zweiten Bogenabschnitt III und V im Vergleich zu dem Nenndurchmesser D2 und D5 der ersten und der zweiten Bohrung bzw. einem Innendurchmesser des Erdwärmerohrs wird die Strömungsgeschwindigkeit an diesen Stellen herabgesetzt. Durch eine kleinere Strömungsgeschwindigkeit des Erdwärmefluids wird die Belastung des Kanals bzw. der Kanalwand im Bereich der Bogenabschnitte III und V verringert. Durch einen vergrößerten Querschnitt im Bereich der Bogenabschnitte wird eine längere Lebensdauer des Erdwärmesondenfußes erwartet.
Figur 7B stellt den Verlauf der Durchmesser entlang einer Mittellinie des Kanals dar, um den Verlauf und die Veränderung der Breite bzw. eines Durchmessers des Kanals darzustellen.
Figur 8 zeigt eine erfindungsgemäße Erdwärmesonde 70, die einen erfindungsgemäßen Erdwärmefuß 2 mit erfindungsgemäßen Erdwärmerohren 60 kombiniert. Der Erdwärmefuß 2 entspricht der Version, die in Figur 6 dargestellt ist. Der Erdwärmefuß 2 ist mit einer Strömungsrichtungsangabe 70 versehen. Beide Erdwärmerohre 60 sind mit einer Außen-Längs-Riffelung und mit einer Strömungsrichtungsangabe 70 versehen. Das Erdwärmerohr 60, das den Zulauf bildet, weist eine Längsriffelung auf, die parallel zu einer Achse des Erdwärmerohrs 62 ausgerichtet ist. Das Erdwärmerohr 60, das den Ablauf bildet, weist eine schräge / helixförmige Längsriffelung 64 auf. Es kann hier sofort zwischen Vorlauf- und Rücklaufrohren unterschieden werden. Zusätzlich sind die Erdwärmerohre 60, 62 noch mit einer Kreisangabe 68 in Form einer (römischen) 2 versehen, die angibt, dass die derart markierten Rohre zusammengehören und unten durch einen U-Bogen miteinander verbunden sind. Durch die Kreisangabe kann ebenfalls ausgeschlossen werden, dass ein Arbeiter bei einer Mehrfach-U-Sonde versehentlich einen Kreis zu einem geschlossenen Kreis verbindet bzw. kurzschließt und diesen dadurch "totlegt" und dadurch eine Doppel-U-Sonde zu einer einfachen U-Sonde macht.
Figur 9A zeigt einen Querschnitt durch ein erfindungsgemäßes Erdwärmerohr mit einer Längsriffelung. Die Riffeltiefe der Längsriffelung 66 beträgt zwischen 0,2 und 1,5 mm. Diese Längsriffeln 66 sollen eine Anbindung an ein Füllmaterial zwischen dem Bohrloch und der Erdwärmesonde verbessern. Durch eine bessere Anbindung kann zudem das Erdwärmerohr besser gegenüber dem Füllmaterial abgedichtet werden, da die Kontaktfläche zwischen dem Füllmaterial und dem Erdwärmerohr vergrößert wird. Durch eine bessere Anbindung kann die Lebensdauer einer Erdwärmesonde deutlich erhöht werden. Zusätzlich ist ein geriffeltes Rohr besser gegen Beschädigungen geschützt, da bei einem Kontakt mit einem anderen Gegenstand zuerst die Riffeln abgetragen werden, bevor eine minimale Wandstärke des Rohrs verringert wird. Die Riffel 66 weisen in einem ersten Quadranten i jeweils einen steilen dreieckigen Querschnitt auf. In einem ersten Teil des ersten Quadranten i sind die Riffel und die Riffeltäler eckig ausgeführt. Ein Teil des ersten Quadranten, der im Uhrzeigersinn liegt, zeigt Riffel, die eckig ausgeführt sind, während die Riffeltäler rund ausgeführt sind, um die Bindung mit oder an ein Füllmaterial zu verbessern. Die Riffel 66 sind in einem gegen den Uhrzeigersinn gelegenen Teil des zweiten Quadranten ii jeweils mit einem rechteckigen Querschnitt versehen, wobei auch die Täler bzw. die konkaven Abschnitte der Riffelung eckig ausgeführt sind. In dem im Uhrzeigersinn gelegenen Teil des zweiten Quadranten II sind die erhabenen Teile der Riffel eckig ausgeführt, während die Riffeltäler verrundet ausgeführt sind. Die Riffel 66 weisen in einem entgegen dem Uhrzeigersinn gelegenen Teil des dritten Quadranten iii jeweils einen trapezoiden oder T-förmigen Querschnitt auf. In der in dem Uhrzeigersinn gelegenen Hälfte des dritten Quadranten iii sind die T-Förmigen Riffel mit verrundeten Riffeltälen versehen. In einer im Uhrzeigersinn ersten Hälfte des vierten Quadranten iv bildet der Querschnitt der Riffel 66 jeweils flache Dreiecke. In einer im Uhrzeigersinn zweiten Hälfte des vierten Quadranten iv bilden die Riffeltäler jeweils Ellipsenkurven, wodurch spitze bzw. scharfkantige Riffel zwischen glatten und runden bzw. abgerundeten Riffeltälern gebildet sind. Durch verrundete Riffeltäer und die spitzen Riffelrücken lässt sich eine verbesserte Füllung der Riffeltäler und damit eine bessere Anhaftung des Füllmaterials erreichen. Durch eine verbesserte Füllung der Riffeltäler und eine bessere Verbindung zwischen den Riffeln und dem Füllmaterial lässt sich eine verbesserte Abdichtung des Bohrlochs und der Erdwärmesonde in Axialrichtung erreichen. Je nach vorliegender Bodenbeschaffenheit und verwendetem Füllmaterial kann sich die eine oder andere Riffelung als vorteilhaft erweisen.
Figur 9B zeigt eine Seitenansicht eines erfindungsgemäßen Erdwärmerohrs mit einer abschnittweisen Längsriffelung. Die Riffeltiefe der Längsriffelung 66 beträgt zwischen 0,2 und 1,5 mm. Hier wechseln sich Riffel-Abschnitte R mit Unterbrechungs-Abschnitten U ab. Die Länge der jeweiligen vorteilhaftesten Riffel-Abschnitte R und der Unterbrechungs-Abschnitten U hängt auch hier von den Bodenbeschaffenheiten und dem verwendeten Füllmaterial ab. Es ist bevorzugt, dass die Riffel-Abschnitte R deutlich länger sind als die ungeriffelten Unterbrechungs-Abschnitte U. Es ist vorgesehen, Unterbrechungs-Abschnitte U zwischen 1cm und 1m, bevorzugt zwischen 3cm und 50cm sowie zwischen 5cm und 25 zu verwenden. Es ist vorgesehen Riffel-Abschnitte R zwischen 3cm und 3m, bevorzugt zwischen 5cm und 150cm sowie zwischen 15cm und 75, weiter bevorzugt zwischen 20 und 50cm zu verwenden. Durch die Grenzen zwischen den Riffel-Abschnitten R und den Unterbrechungs-Abschnitten U sollen Grenzen geschaffen werden, die ein Ablöseverhalten zwischen dem Rohr und dem Füllmaterial verändern. Sollte sich die Verbindung zwischen dem Rohr und dem Füllmaterial in einem Bereich lösen, soll durch die Grenzen verhindert werden dass diese Ablösung an dem gesamten Erdwärmerohr entlangwandern kann. Es kann auch vorgesehen sein, Übergänge Ü
   zwischen geriffelten und ungeriffelten Abschnitten vorzusehen. Durch sanfte Übergänge kann auch hier bei einem Schrumpfen oder einem Ausdehnen des Materials in Axialrichtung eine verbesserte Abdichtung in Axialrichtung zwischen dem Rohr und einem Füllmaterial erreicht werden. Bei einer Bewegung in Axialrichtung dichtet dabei jeweils eine Konusfläche eines entsprechenden Übergangs mit der entsprechenden Hohl-Konusfläche des Füllmaterials ab. Im Idealfall werden die Rohre dabei unterkühlt und damit in einem leicht geschrumpften Zustand in das Erdreich eingebracht und mit Füllmaterial verfüllt, so dass das Füllmaterial abbindet. Nachdem das Füllmaterial abgebunden hat, kann das Erdwärmerohr wieder auf Betriebstemperatur gebracht werden, wodurch es sich in dem Bohrloch und in dem abgebundenen Füllmaterial ausdehnt und so das Erdwärmerohr noch besser gegen das Füllmaterial abdichtet.

Ein Verfahren zum Herstellen eines vorstehenden Erdwärmesondenfußes, umfasst:
Bereitstellen eines einzelnen Blocks aus Polyethylen,
spanendes Bearbeiten des Blocks, um eine äußere Form des Erdwärmesondenfuß (2) herauszuarbeiten,
Bohren bzw. Fräsen von 2 bis 4 Muffen (10) in eine Oberseite des Blocks aus Polyethylen, sowie Fräsen eines U-Förmigen Kanals, unter Verwendung einer 5-Achsen-CNC-Fräse oder unter Verwendung eines Wirbelfräsvorrichtung.

Ein Verfahren kann weiter umfassen:
Verbinden des Erdwärmesondenfußes (2) wie vorstehend mit Erdwärmerohren durch Anschweißen.

Mit den dargestellten Ausführungen sollen auch alle Kombinationen von Merkmalen als offenbart angesehen werden, die nicht explizit in einer Figur zusammen kombiniert wurden.

### Bezugszeichenliste

- 2: Erdwärmesondenfuß
- 4: einstückiger Körper
- 6,6': mehrteiliger Körper
- 8: Schweißnaht
- 10: parallel ausgerichteten Muffen zur Verbindung mit mindestens zwei Erdwärmerohren,
- 12: erster u-förmiger Kanal
- 14: zweiter u-förmiger Kanal
- 16: obere Innenkontur des Kanals.
- 18: Erdwärmesondenfuß mit zwei miteinander verbundenen Körpern
- 20: Längsnut
- 22: Flacheisen
- 23: Rohrhülse / Zentrierhülse
- 24: Seitenkanäle
- 26: Zentralkanal.
- 30: Unterseite
- 32: konische Form
- 34: oberes Gewinde einem oberen Ende 36 des Erdwärmesondenfußes
- 35: Schraube / Inbusschraube
- 36: oberes Ende des Erdwärmesondenfußes
- 38: unteres Gewinde an einem unteren Ende 40 des Erdwärmesondenfußes
- 40: unteres Ende des Erdwärmesondenfußes
- 42: Spitze
- 44: Öse, eingeschraubt
- 46: Öse, herausgearbeitet
- 48: Gewicht
- 50: Einströmseite
- 52: Einlauftrichter
- 54: Auslaufverengung
- 56: Ausströmseite
- 58: Erdwärmerohr
- 60: Erdwärmerohr mit Außen-Längs-Riffelung
- 62: Längsriffelung parallel zu einer Achse des Erdwärmerohrs
- 64: schräge / helixförmige Längsriffelung
- 66: Riffel
- 68: Kreisangabe
- 70: Strömungsrichtungsangabe.
- 72: Erdwärmesonde

- I: erste Muffe
- II: erste Bohrung
- III: erste Bogenabschnitt
- IV: Abschnitt zwischen den Bogenabschnitte
- V: zweite Bogenabschnitt
- VI: zweite Bohrung
- VII: zweite Muffe

- D1: Durchmesser erste Muffe
- D2: Durchmesser erste Bohrung
- D3: Durchmesser erste Bogenabschnitt
- D4: Durchmesser Abschnitt zwischen den Bogenabschnitte
- D5: Durchmesser zweite Bogenabschnitt
- D6: Durchmesser zweite Bohrung
- D7: Durchmesser zweite Muffe

- i: erster Quadrant
- ii: zweiter Quadrant
- iii: dritter Quadrant
- iv: vierter Quadrant

- R: Abschnittsweise Riffelung
- U: Unterbrechung der abschnittsweisen Riffelung
- Ü: Übergänge der der abschnittsweisen Riffelung

## Patentansprüche

1. Erdwärmerohr (60) mit Außen-Längs-Riffelung, wobei die Längsriffelung eine Riffeltiefe zwischen 1,5 und 0,2mm, bevorzugt zwischen 1,0 und 0,4mm und weiter bevorzugt zwischen 0,6 und 0,4mm aufweist, **dadurch gekennzeichnet, dass** die Riffel im Querschnitt trapezoid, T-förmig oder pilzförmig sind, und dass die Riffelung nur abschnittweise auf dem Erdwärmerohr (60) vorliegt.

2. Erdwärmerohr (60) mit Außen-Längs-Riffelung gemäß Anspruch 1, wobei die Riffelung zusätzlich eine sägezahnartige Längsstufung aufweist.

3. Erdwärmerohr (60) mit Außen-Längs-Riffelung gemäß Anspruch 1 oder 2, wobei die Rohre mit einer Strömungsrichtungsangabe versehen sind.

4. Erdwärmerohr (60) mit Außen-Längs-Riffelung gemäß Anspruch 1, 2 oder 3, wobei die Riffelung um bis zu 35°, bevorzugt bis zu 15° gegenüber einer Achse der Erdwärmerohre (60) geneigt ist.

5. Erdwärmerohr (60) mit Außen-Längs-Riffelung gemäß einem der Ansprüche 1 bis 4, wobei konkave Abschnitte der Riffelung verrundet sind und/oder einen Verrundungsradius aufweisen.

6. Erdwärmerohr (60) mit Außen-Längs-Riffelung gemäß einem der Ansprüche 1 bis 5, wobei die in Abschnitten vorliegende Riffelung mit Übergängen (Ü) zwischen den geriffelten und den ungeriffelten Abschnitten versehen ist.

7. Erdwärmesonde umfassend einen Erdwärmesondenfuß (2) und aufweisend ein Erdwärmerohr mit Außen-Längs-Riffelung gemäß Anspruch 1 bis 6.

8. Erdwärmesonde nach Anspruch 7, wobei der Erdwärmesondenfüß (2) aus Polyethylen, umfasst:
einen einstückigen Körper (4) mit mindestens zwei parallel ausgerichteten Muffen (10) zur Verbindung mit mindestens zwei Erdwärmerohren (25, 60),
wobei der Körper (4) mindestens einen u-förmigen Kanal aufweist, der die zwei Muffen (10) miteinander verbindet, wobei der u-förmige Kanal glatt ist und keine Querschnittsverengungen aufweist, und
wobei der Erdwärmesondenfuß (2) aus einem einzelnen Polyethylen-Block spanend herausgearbeitet ist.

9. Erdwärmesonde nach Anspruch 8, wobei der Kanal anschließend an die Muffen (10) zwei Bohrungen umfasst, die jeweils einen Winkel zwischen 4° und 12°, bevorzugt zwischen 6,5 und 9,5 und weiter bevorzugt zwischen 7,5 und 8,5 Grad zu den Muffen (10) aufweisen.

10. Erdwärmesonde nach Anspruch 8 oder 9, **dadurch gekennzeichnet, dass** der Kanal von den Bohrungen ausgehend an zwei Bogenabschnitte grenzt, die miteinander verbunden sind, wobei eine Querschnittsfläche des Kanals in den Bogenabschnitten gegenüber einem Ende der Bohrung um 10% bis 50%, bevorzugt zwischen 20% und 40% und weiter bevorzugt zwischen 25% und 35% vergrößert ist.

11. Erdwärmesonde nach Anspruch 8, 9 oder 10, wobei der u-förmige Kanal mittels einer 5-Achsen-CNC-Fräse und/oder durch Wirbelfräsen aus dem Polyethylen-Block herausgearbeitet ist.

12. Erdwärmesonde nach einem der Ansprüche 8 bis 11, **gekennzeichnet durch** einen Körper (4), der zwei Muffen (10) und einen Kanal aufweist und bevorzugt weiter eine Längsnut umfasst, in der bevorzugt ein Flacheisen (22) eingelegt bzw. befestigt ist und wobei bevorzugt ein Rohrhülse (23) oben an dem Flacheisen (22) angebracht ist, wobei die Erdwärmesonde bevorzugt zwei derartige miteinander verbundene Erdwärmesondenfüße umfasst.

13. Erdwärmesonde nach einem der Ansprüche 8 bis 12, **gekennzeichnet durch** ein oberes Gewinde (34), das zwischen den Muffen (10) an einem oberen Ende des Erdwärmesondenfußes (2) angeordnet ist, wobei bevorzugt eine Schraube (35) in das obere Gewinde (34) eingeschraubt ist, und/oder
durch ein unteres Gewinde (38), das an einem unteren Ende (40) des Erdwärmesondenfußes (2) angeordnet ist, wobei bevorzugt eine Spitze (42) oder eine Öse (44), in das untere Gewinde eingeschraubt ist, und/oder
durch eine Öse (46) am unteren Ende, die direkt aus dem Polyethylenblock herausgearbeitet ist, und/oder, weiter umfassend ein Gewicht, das starr an dem Erdwärmesondenfuß (2) befestigt ist.

14. Erdwärmerohr mit äußerlicher Längs-Riffelung gemäß einem der Ansprüche 1 bis 6 und/oder Erdwärmesonde gemäß einem der Ansprüche 7 bis 13, **dadurch gekennzeichnet, dass** der Polyethylenblock, der Erdwärmesondenfuß (2), das Erdwärmerohr und/oder die Erdwärmesonde PE 100 oder PE 100 RC oder PE 100 RT umfassen.

## Claims

1. Geothermal pipe (60) with external longitudinal fluting, wherein the longitudinal fluting has a fluting depth of between 1.5 and 0.2 mm, preferably between 1.0 and 0.3 and more preferably between 0.6 and 0.4 mm, **characterised in that** the flutes are trapezoidal, T-shaped or mushroom-shaped in cross-section and
**in that** the fluting is only present on the geothermal pipe (60) in sections.

2. Geothermal pipe (60) with external longitudinal fluting according to claim 1 wherein the fluting also has saw-tooth-like longitudinal gradation.

3. Geothermal pipe (60) with external longitudinal fluting according to claim 1 or 2 wherein the pipe is provided with a flow direction indicator

4. Geothermal pipe (60) with external longitudinal fluting according to claim 1, 2 or 3, wherein the fluting is inclined at up to 35°, preferably up to 15° vis-à-vis an axis of the geothermal pipe (60).

5. Geothermal pipe (60) with external longitudinal fluting according to any one of claims 1 to 4 wherein concave sections of the fluting are rounded and/or have a rounding radius.

6. Geothermal pipe (60) with external longitudinal fluting according to any one of claims 1 to 5 wherein the fluting present in sections is provided with translations (Ü) between the fluted and non-fluted sections.

7. Geothermal probe comprising a geothermal probe foot (2) and having a geothermal pipe with external longitudinal fluting according to claims 1 to 6.

8. Geothermal probe according to claim 7 wherein the geothermal probe foot (2) made of polyethylene comprises:
a one-piece body (4) with at least two parallel-orientated sleeves (10) for connection to at least two geothermal pipes (25, 60),
wherein the body (4) comprises at least one U-shaped channel which connects the two sleeves (10) to each other, wherein the U-shaped channel is smooth and has no cross-sections constrictions, and
wherein the geothermal probe foot (2) is produced by machining from a single polyethylene block.

9. Geothermal probe according to claim 8 wherein adjoining the sleeves (10) the channel has two borings, which are each at an angle of between 4° and 12°, preferably between 6.5 and 9.5 and more preferably between 7.5 and 8.5 degrees to the sleeves (10).

10. Geothermal probe according to claim 8 or 9 **characterised in that** the starting from the borings the channel borders on two arc sections which are connected to each other, wherein a cross-section area of the channel in the arc sections is 10% to 50%, preferably 20% and 40% and more preferably between 25% and 35% enlarged vis-à-vis an end of the boring.

11. Geothermal probe according to claim 8, 9 or 10 wherein the U-shaped channel is machined from the polyethylene block by means of a 5-axis CNC milling cutter and/or by way of trochoidal milling.

12. Geothermal probe according to any one of claims 8 to 11 **characterised by** a body (4) which comprises two sleeves (10) and a channel and preferably also has a longitudinal groove into which a flat iron bar (22) is preferably inserted or fastened and wherein preferably a pipe sleeve (23) is applied at the top of the flat iron bar (22), wherein the geothermal probe preferably comprises two such geothermal probe feet connected to each other.

13. Geothermal probe according to any one of claims 8 to 12 **characterised by** an upper thread (34) which is arranged between the sleeves (10) at an upper end of the geothermal probe foot (2) wherein preferably a screw (35) is screwed into the upper thread (34) and/or
by a lower thread (38) which is arranged at the lower end (40) of the geothermal probe foot (2), wherein preferably a tip (42) or an eyelet (44) is screwed into the lower thread and/or
by an eyelet (46) at the lower end which is produced directly from the polyethylene block and/or also comprising a weight that is rigidly attached to the geothermal probe foot (2).

14. Geothermal pipe with external longitudinal fluting according to any one of claims 1 to 6 and/or geothermal probe according to any one of claims 7 to 13 **characterised in that** the polyethylene block, the geothermal probe foot (2), the geothermal pipe and/or the geothermal probe consist of PE 100 or PE 100 RC or PE 100 RT.

## Revendications

1. Tube géothermique (60), pourvu d'une striure longitudinale extérieure, la striure longitudinale présentant une profondeur de striure comprise entre 1,5 et 0,2 mm, de préférence entre 1,0 et 0,4 mm et de manière plus préférentielle, entre 0,6 et 0,4mm, **caractérisé en ce qu'**en section transversale, la strie est de forme trapézoïdale, en forme de T ou en forme de champignon, et **en ce que** la striure n'est présente que par tronçons sur le tube géothermique (60).

2. Tube géothermique (60) pourvu d'une striure longitudinale extérieure selon la revendication 1, la striure comportant en supplément un échelonnement longitudinal en dents de scie.

3. Tube géothermique (60) pourvu d'une striure longitudinale extérieure selon la revendication 1 ou 2, le tube étant muni d'une indication de la direction d'écoulement.

4. Tube géothermique (60) pourvu d'une striure longitudinale extérieure selon la revendication 1, 2 ou 3, la striure étant inclinée de jusqu'à 35°, de préférence de jusqu'à 15° par rapport à un axe du tube géothermique (60).

5. Tube géothermique (60) pourvu d'une striure longitudinale extérieure selon l'une quelconque des revendications 1 à 4, des tronçons concaves de la striure étant arrondis et/ou présentant un rayon d'arrondi.

6. Tube géothermique (60) pourvu d'une striure longitudinale extérieure selon l'une quelconque des revendications 1 à 5, les striures présentes en tronçons étant munies de passages (Ü) entre les tronçons striés et les tronçons non striés.

7. Sonde géothermique comprenant un pied de sonde géothermique (2) et comportant un tube géothermique pourvu d'une striure longitudinale extérieure selon la revendication 1 à 6.

8. Sonde géothermique selon la revendication 7, le pied de sonde géothermique (2) en polyéthylène comprenant :
un corps en monobloc (4) pourvu d'au moins deux manchons (10) orientés à la parallèle, destinés à être assemblés sur au moins deux tubes géothermiques (25, 60),
le corps (4) comportant au moins un canal en forme de U, qui relie l'un à l'autre les deux manchons (10), le canal en forme de U étant lisse et ne comportant aucun étranglement de section transversale et
le pied de sonde géothermique (2) étant usiné par enlèvement de copeaux à partir d'un unique bloc de polyéthylène.

9. Sonde géothermique selon la revendication 8, le canal comprenant en raccordement sur les manchons (10) deux perçages qui comportent chacun un angle compris entre 4° et 12°, de préférence entre 6,5 et 9,5 et de manière plus préférentielle, entre 7,5 et 8,5 degrés par rapport aux manchons (10).

10. Sonde géothermique selon la revendication 8 ou 9, **caractérisée en ce qu'**en partant des perçages, le canal est adjacent à deux segments d'arc qui sont assemblés l'un à l'autre, une surface de section transversale du canal étant agrandie par rapport à une extrémité du perçage d'une valeur de 10 % à 50 %, de préférence comprise entre 20 % et 40 % et de manière plus préférentielle, comprise entre 25 % et 35 %.

11. Sonde géothermique selon la revendication 8, 9 ou 10, le canal en forme de U étant usiné à partir du bloc en polyéthylène à l'aide d'une fraiseuse CNC à 5 axes et/ou par fraisage en tourbillon.

12. Sonde géothermique selon l'une quelconque des revendications 8 à 11, **caractérisée par** un corps (4), qui comporte deux manchons (10) et un canal et par ailleurs de préférence une rainure longitudinale dans laquelle est inséré ou fixé de préférence un fer plat (22) et de préférence une gaine tubulaire (23) étant montée sur le haut du fer plat (22), la sonde géothermique comprenant de préférence deux pieds de sonde géothermique de ce type assemblés l'un à l'autre.

13. Sonde géothermique selon l'une quelconque des revendications 8 à 12, **caractérisée par** un taraudage supérieur (34), qui est placé entre les manchons (10) et une extrémité supérieure du pied de la sonde géothermique (2), de préférence une vis (35) étant vissée dans le taraudage supérieur (34) et/ou
par un taraudage inférieur (38), qui est placé sur une extrémité inférieure (40) du pied de la sonde géothermique (2), de préférence une pointe (42) ou un oeillet (44), étant vissé dans le taraudage inférieur, et/ou
par un oeillet (46) sur l'extrémité inférieure, qui est usiné directement à partir du bloc de polyéthylène et/ou comprenant par ailleurs un poids qui est fixé de manière rigide sur le pied de la sonde géothermique (2) .

14. Tube géothermique, pourvu d'une striure longitudinale extérieure, selon l'une quelconque des revendications 1 à 6 et/ou sonde géothermique selon l'une quelconque des revendications 7 à 13, caractérisé(e) en ce que le bloc de polyéthylène, le pied de la sonde géothermique (2), le tube géothermique et/ou la sonde géothermique comprennent du PE 100 ou du PE 100 RC ou du PE 100 R.
